# EUROPÄISCHE PATENTSCHRIFT

(11) **EP 2 584 541 B1**
(45) Veröffentlichungstag und Bekanntmachung des Hinweises auf die Patenterteilung: **05.08.2015**
(21) Anmeldenummer: 12450043.0
(22) Anmeldetag: 18.10.2012
(51) Int. Cl.: G07C 9/00, E05B 47/00, H04B 13/00, B60R 25/24

(54) **Verfahren zur Zutrittskontrolle**
Method for access control
Procédé de contrôle d'accès

(30) Priorität: 18.10.2011 AT 15252011
(43) Veröffentlichungstag der Anmeldung: 24.04.2013
(73) Patentinhaber: EVVA Sicherheitstechnologie GmbH, 1120 Wien (AT)
(72) Erfinder: Arthaber, Holger, 1060 Wien (AT); Psaier, Stefan, 1050 Wien (AT)
(74) Vertreter: Keschmann, Marc

(56) Entgegenhaltungen:
- EP-A1- 1 024 626
- WO-A1-2007/036061
- WO-A1-2009/152628
- DE-A1- 10 132 031
- DE-A1- 10 331 440

## Beschreibung

Die Erfindung betrifft ein Verfahren zur Zutrittskontrolle insbesondere in Gebäuden, bei dem eine bidirektionale Datenübermittlung zwischen einem elektronischen Schlüssel und einer Zutrittskontrollvorrichtung stattfindet, wobei die Datenübermittlung die Übermittlung von Identifikationsdaten vom elektronischen Schlüssel an die Zutrittskontrollvorrichtung umfasst, wobei die Identifikationsdaten in der Zutrittskontrollvorrichtung zur Feststellung der Zutrittsberechtigung ausgewertet werden und in Abhängigkeit von der festgestellten Zutrittsberechtigung ein Sperrglied zum wahlweisen Freigeben oder Sperren des Zutritts angesteuert wird, wobei die Datenübermittlung zumindest teilweise über eine kapazitive Kopplung zwischen dem elektronischen Schlüssel und der Zutrittskontrollvorrichtung erfolgt.

Die Erfindung betrifft weiters eine Vorrichtung zur Durchführung dieses Verfahrens, umfassend eine Zutrittskontrollvorrichtung und einen elektronischen Schlüssel, die jeweils eine Sende-/Empfangseinrichtung aufweisen, um eine bidirektionale Datenübermittlung zwischen dem elektronischen Schlüssel und der Zutrittskontrollvorrichtung zu ermöglichen, wobei der elektronische Schlüssel einen Speicher für Identifikationsdaten aufweist, der mit der Sende-/Empfangseinrichtung des Schlüssels zur Übermittlung der Identifikationsdaten an die Zutrittskontrollvorrichtung zusammenwirkt, wobei die Zutrittskontrollvorrichtung eine Auswerteschaltung zur Feststellung der Zutrittsberechtigung auf Grund der empfangenen Identifikationsdaten aufweist und die Auswerteschaltung mit einem Sperrglied zum wahlweisen Freigeben oder Sperren des Zutritts zusammenwirkt, wobei die Sende-/Empfangseinrichtung des elektronischen Schlüssels und der Zutrittskontrollvorrichtung jeweils ein wenigstens eine Koppelkapazität aufweisendes kapazitives Datenübertragungsmodul aufweist, sodass die Datenübermittlung zumindest teilweise über eine kapazitive Kopplung zwischen dem elektronischen Schlüssel und der Zutrittskontrollvorrichtung erfolgen kann.

Verfahren und Vorrichtungen dieser Art sind beispielsweise aus den Schriften WO 2007/128009 A1, EP 1168678 A1 und WO 00/15931 A1 bekannt geworden. Der Vorteil der kapazitiven Datenübertragung liegt darin, dass die Datenübertragung zwischen dem elektronischen Schlüssel und der Zutrittskontrollvorrichtung nicht mit einfachen Mitteln abgehört oder abgefangen werden kann. Die kapazitive Datenübertragung funktioniert so, dass der elektronische Schlüssel ein kapazitives Nahfeld erzeugt, über welches die zu übertragenden Daten ausgesendet werden. Das kapazitive Nahfeld wird hierbei an die den Schlüssel tragende Person eingekoppelt und über die Person weitertransportiert. Weiters weist die Empfangseinheit der Zutrittskontrollvorrichtung wenigstens eine kapazitive Koppelfläche auf, sodass sich bei Berührung der Zutrittskontrollvorrichtung oder bei Annäherung an die Zutrittskontrollvorrichtung durch die Person ein Wechselstromkreis schließt und ein elektrischer Fluss durch die Zutrittskontrollvorrichtung entsteht, der von der Empfangseinheit erfasst werden kann. Die kapazitive Datenübertragung hat zur Folge, dass der elektronische Schlüssel selbst nicht in unmittelbare Nähe zum Empfänger der Zutrittskontrollvorrichtung gebracht werden muss und es bedarf keiner benutzergesteuerten Aktivierung des Schlüssels, beispielsweise durch einen Knopfdruck. Vielmehr reicht es aus, wenn der elektronische Schlüssel sich in Körpernähe des jeweiligen Benutzers befindet, beispielsweise in einer Hosentasche, Aktentasche oder dgl. Die zu übertragenden Daten können hierbei beispielsweise auf eine vom elektronischen Schlüssel generierte Trägerfrequenz aufmoduliert werden.

Die Bedienerfreundlichkeit der Zutrittskontrolle wird dadurch wesentlich erhöht und es wird überdies sichergestellt, dass eine Datenübertragung lediglich dann erfolgt, wenn die den Schlüssel tragende Person sich der Zutrittskontrollvorrichtung nähert oder diese berührt, sodass Manipulationsmöglichkeiten durch Dritte nahezu ausgeschlossen sind. Weiters ist durch den Umstand, dass ein niedrig energetisches, kapazitives Nahfeld zur Anwendung gelangt, der Energieverbrauch des Zutrittskontrollsystems äußerst gering, und insbesondere der Stromverbrauch des elektronischen Schlüssels.

Unter elektronischen Schlüsseln werden nachfolgend unterschiedliche Ausbildungen von Identmedien verstanden, die einen elektronischen Code bzw. Identifikationsdaten gespeichert haben, z.B. in der Form von Karten, Schlüsselanhängern und Kombinationen aus mechanischen und elektronischen Schlüsseln.

Nachteilig bei der kapazitiven Übertragung der Daten im Zuge eines Sperrvorganges ist, dass die bei der kapazitiven Kopplung entstehenden Verschiebungsströme auf Grund von elektrisch leitenden Strukturen z.B. im Bereich einer Tür verschleppt werden können, sodass die Ausbreitung eines Signals nicht immer genau kontrolliert werden kann. Es kann daher ohne weitere Vorkehrungen der Fall eintreten, dass vom Schlüssel ausgesendete Identifikationsdaten nicht nur der Zutrittskontrollvorrichtung der gewünschten Tür, sondern auch jener der benachbarten Tür zur Verfügung stehen, sodass ein Sperrvorgang möglicherweise bei der falschen Tür ausgelöst wird.

Die WO 2009/152628 A1 zeigt ein Zutrittskontrollsystem mit kapazitiver und HF-Kopplung.

Der Erfindung liegt daher die Aufgabe zugrunde, ein Zutrittskontrollverfahren bzw. -vorrichtung der eingangs genannten Art hinsichtlich der oben genannten Nachteile zu verbessern, ohne die Vorteile der kapazitiven Übertragung, wie z.B. die Energieeffizienz und die fehlende Freiraumausbreitung, zu verlieren.

Zur Lösung dieser Aufgabe wird in den unabhängigen Ansprüche 1 und 14 dargestellt. Die Erfindung sieht vor, dass ein Teil der zwischen dem elektronischen Schlüssel und der Zutrittskontrollvorrichtung übermittelten Daten über eine kapazitive Kopplung und ein Teil der Daten über Radiowellen übertragen wird. Dadurch, dass unterschiedliche Übertragungsverfahren alternierend oder parallel verwendet werden, können die Übertragungscharakteristika der jeweiligen Verfahren optimal ausgenützt werden. Bei der kapazitiven Kopplung erfolgt die Datenübertragung mit Hilfe eines elektrischen Feldes, während die Datenübertragung bei Radiowellen über ein elektromagnetisches Feld erfolgt. Die genannten Felder haben unterschiedliche Ausbreitungseigenschaften, die in Abhängigkeit von der Art der jeweils zu übertragenden Daten sowie von der Datenmenge ausgenützt werden. Das für die Datenübertragung mit Hilfe der kapazitiven Kopplung verwendete elektrische Feld breitet sich nur wenige Zentimeter weit aus, während ein bei der Radiowellenübertragung auftretendes elektromagnetisches Feld eine wesentlich größere Ausbreitung aufweist. Bei der Verwendung von gerichteter Radiostrahlung (was geeigneter Weise eine kurze Wellenlänge impliziert) kann infolge der hohen Trägerfrequenz auch die Datenübertragungsrate höher im Vergleich zu derjenigen der kapazitiven Übertragung sein.

Gemäß einer bevorzugten Verfahrenweise werden die Identifikationsdaten vom elektronischen Schlüssel an die Zutrittskontrollvorrichtung über eine kapazitive Kopplung übermittelt. Bei der Übermittlung der Identifikationsdaten ist die Übertragungs- und Abhörsicherheit von besonderer Bedeutung. Hier werden im Rahmen der Erfindung die Vorteile der kapazitiven Kopplung ausgenützt, die nur über sehr kurze Distanzen funktioniert, sodass ein Abhören oder Abfangen der übertragenen Daten kaum möglich ist. Andere Daten hingegen, die nicht der unmittelbaren Identifikation eines Schlüssels dienen, können hingegen über Radiowellen übertragen werden. Beispielsweise sind die über einen Rückkanal von der Zutrittskontrollvorrichtung an den elektronischen Schlüssel übertragenen Daten weniger sensibel. Eine weitere bevorzugte Verfahrensweise sieht daher vor, dass zumindest ein Teil der von der Zutrittskontrollvorrichtung an den elektronischen Schlüssel übermittelten Daten über Radiowellen übertragen wird.

Für manche Anwendungsfälle kann es völlig ausreichend sein, dass alle vom elektronischen Schlüssel an die Zutrittskontrollvorrichtung übermittelten Daten über eine kapazitive Kopplung übertragen und alle von der Zutrittskontrollvorrichtung an den elektronischen Schlüssel übermittelten Daten über Radiowellen übertragen werden. Dies verringert den baulichen Aufwand sowohl in der Zutrittskontrollvorrichtung als auch im elektronischen Schlüssel, da der elektronische Schlüssel lediglich einen kapazitiv arbeitenden Sender und einen Empfänger für Funkwellenübertragung benötigt und die Zutrittskontrollvorrichtung umgekehrt lediglich einen kapazitiv arbeitenden Empfänger und einen Sender für Funkwellenübertragung benötigt.

Zur Erhöhung der Sicherheit ist vorteilhaft, wenn die den elektronischen Schlüssel tragende Person im Zuge des Sperrvorgangs geortet werden kann. Dies insbesondere im Hinblick auf die eingangs erwähnte Problematik der eventuellen Verschleppung von kapazitiv übertragenen Daten. Dies aber auch im Hinblick auf die "Man-in-the-Middle"-Problematik, bei der die kapazitive Übermittlung von Daten an die Zutrittskontrollvorrichtung nicht allein über diejenige Person erfolgt, die den elektronischen Schlüssel mit sich führt, sondern über eine zwischen der genannten Person und der Zutrittskontrollvorrichtung stehende Person. Der "Man-in-the-Middle" würde somit selbst keinen berechtigten Schlüssel mit sich führen müssen, um sich einen Zutritt zu verschaffen, sondern könnte mit einer Hand die Zutrittskontrollvorrichtung und mit der anderen Hand die den berechtigten Schlüssel mit sich führende Person berühren. Die Ortung der Person soll sicherstellen, dass diejenige Person, von deren elektronischem Schlüssel die Zutrittskontrollvorrichtung Daten erhält, sich tatsächlich in unmittelbarer Nähe der Zutrittskontrollvorrichtung befindet. Die Ortung erfolgt in bevorzugter Weise derart, dass die Zutrittskontrollvorrichtung ein Anwesenheitskontrollsignal über Radiowellen aussendet, dessen Reichweite weniger als 2m, vorzugsweise weniger als 1m beträgt. Das Anwesenheitskontrollsignal wird dabei nur von einem elektronischen Schlüssel empfangen, der sich innerhalb der Reichweite des Funksignals befindet. Eine weitere Eingrenzung kann bevorzugt dadurch erfolgen, dass das Anwesenheitskontrollsignal über wenigstens eine Richtantenne gebündelt ausgesendet wird. Bevorzugt wird im Zuge des Ortungsvorganges zusätzlich eine Nachricht vom elektronischen Schlüssel an die Zutrittskontrollvorrichtung über eine kapazitive Kopplung übermittelt. Während des Ortungsvorganges erfolgt die Daten- bzw. Signalübermittlung in die eine Richtung somit über Radiowellen und in die andere Richtung über eine kapazitive Kopplung, sodass die unterschiedliche Ausbreitungscharakteristik eines elektrischen Felds (kapazitive Kopplung) und eines elektromagnetischen Felds (Radiowellenübertragung) ausgenützt werden kann, um die Position des elektronischen Schlüssels festzustellen. Der elektronische Schlüssel wird nur in dem Bereich geortet, in dem sich die beiden Ausbreitungsfelder überschneiden.

Grundsätzlich kann das Anwesenheitskontrollsignal die Antwort auf eine Anfragenachricht des Schlüssels sein oder das Anwesenheitskontrollsignal kann die Rücksendung einer Empfangsbestätigungsnachricht auslösen. Auch beides ist denkbar.

Bevorzugt wird hierbei so vorgegangen, dass die Zutrittskontrollvorrichtung das Anwesenheitskontrollsignal aussendet, nachdem sie eine Anfragenachricht über eine kapazitive Kopplung erhalten hat.

Bevorzugt ist vorgesehen, dass der elektronische Schlüssel beim Empfang des Anwesenheitskontrollsignals eine Empfangsbestätigungsnachricht rückübermittelt und die Zutrittskontrollvorrichtung nur bei Erhalt der Empfangsbestätigungsnachricht die weitere Datenübermittlung zwischen der Zutrittskontrollvorrichtung und dem elektronischen Schlüssel freigibt. Die Empfangsbestätigungsnachricht wird dabei insbesondere über eine kapazitive Kopplung rückübermittelt.

Um die im Zuge des Ortungsvorganges übermittelten Nachrichten einander zuordnen zu können, ist bevorzugt vorgesehen, dass mit der Anfragenachricht oder dem Anwesenheitskontrollsignal eine Kennung übermittelt wird, die mit der rückübermittelten Nachricht retourniert wird.

Eine besonders vorteilhafte Verfahrensweise zur Ortung des elektronischen Schlüssels bei der Übermittlung der besonders sensiblen Identifikationsdaten liegt darin, dass die bidirektionale Datenübermittlung zwischen dem elektronischen Schlüssel und der Zutrittskontrollvorrichtung folgende Schritte umfasst:
- Übermitteln der Identifikationsdaten vom elektronischen Schlüssel an die Zutrittskontrollvorrichtung über eine kapazitive Kopplung,
- Überprüfen, ob der elektronische Schlüssel in einem vorgegebenen örtlichen Bereich in der Nähe der Zutrittskontrollvorrichtung anwesend ist, indem ein Anwesenheitskontrollsignal von der Zutrittskontrollvorrichtung über gerichtete und schwache Radiowellen ausgesendet wird und im Falle des Empfangs des Anwesenheitskontrollsignals durch den elektronischen Schlüssel eine Empfangsbestätigungsnachricht vom elektronischen Schlüssel an die Zutrittskontrollvorrichtung übermittelt wird.

Eine besonders präzise Ortung des elektronischen Schlüssels erfolgt dabei dadurch, dass das Anwesenheitskontrollsignal über Radiowellen ausgesendet wird, deren Reichweite weniger als 2m, vorzugsweise weniger als 1m beträgt.

Um den oben angesprochenen Überschneidungsbereich der Ausbreitungsfelder des elektrischen und des elektromagnetischen Felds möglichst gut eingrenzen zu können, wird bevorzugt so vorgegangen, dass die Zutrittskontrollvorrichtung einer Tür zugeordnet ist und dass das Anwesenheitskontrollsignal über im Wesentlichen senkrecht zur Tür gerichtete Radiowellen ausgesendet und/oder empfangen wird. Bei dieser Verfahrensweise werden lediglich solche elektronischen Schlüssel erfasst, die im Bereich der im Wesentlichen senkrecht zur Tür gerichteten Radiowellen anwesend sind. Auf diese Art und Weise gelingt eine gezielte Ortung in einem vorgegeben Umgebungsbereich einer Tür.

Das der Erfindung zugrunde liegende Prinzip, die Daten teilweise über eine kapazitive Kopplung und teilweise über Radiowellen zu übertragen, kann auch im Falle der verschlüsselten Übermittlung von Daten verwendet werden. Eine bevorzugte Verfahrensweise sieht in diesem Zusammenhang vor, dass die Identifikationsdaten über eine sichere Verbindung über eine kapazitive Kopplung übermittelt werden und dass der für den Aufbau der sicheren Verbindung erforderliche Austausch von Daten zwischen dem elektronischen Schlüssel und der Zutrittskontrollvorrichtung zumindest teilweise über Radiowellen erfolgt.

Die Übertragung von Daten über eine kapazitive Kopplung hat wie eingangs erwähnt den Vorteil, dass der elektronische Schlüssel selbst nicht in die unmittelbare Nähe der Zutrittskontrollvorrichtung gebracht werden muss, um die Datenübertragung auszulösen. Vielmehr reicht es aus, dass der elektronische Schlüssel am Körper oder in Körpernähe der betreffenden Person getragen wird, da der menschliche Körper als Übertragungsmedium mitverwendet werden kann. Eine bevorzugte Verfahrensweise sieht in diesem Zusammenhang vor, dass vom elektronischen Schlüssel über eine kapazitive Kopplung an die Zutrittskontrollvorrichtung übermittelte Daten vom elektronischen Schlüssel in die den elektronischen Schlüssel tragende Person eingekoppelt werden und von einem sich einer Koppelelektrode der Zutrittskontrollvorrichtung annähernden oder diese berührenden Körperteil der Person in die Zutrittskontrollvorrichtung eingekoppelt werden.

Gemäß einem weiteren Aspekt der vorliegenden Erfindung wird eine Vorrichtung der eingangs genannten Art derart weitergebildet, dass die Sende-/Empfangseinrichtung des elektronischen Schlüssels und der Zutrittskontrollvorrichtung jeweils weiters ein Funkübertragungsmodul aufweist, sodass die zwischen dem elektronischen Schlüssel und der Zutrittskontrollvorrichtung übermittelten Daten wahlweise über eine kapazitive Kopplung und/oder über Radiowellen übertragen werden können. Bevorzugte Weiterbildungen der erfindungsgemäßen Vorrichtung ergeben sich aus den Unteransprüchen.

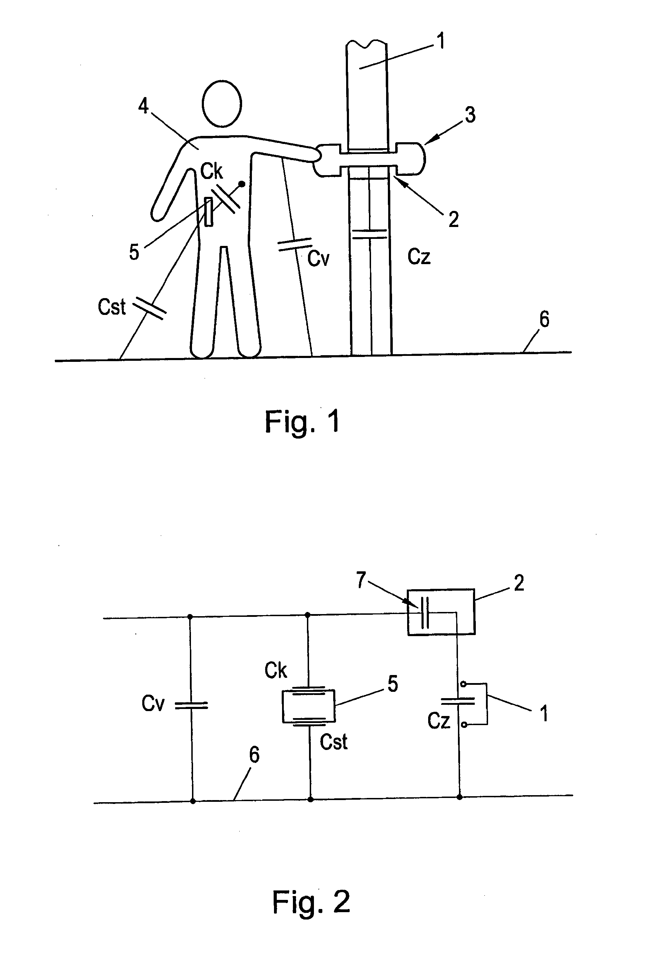

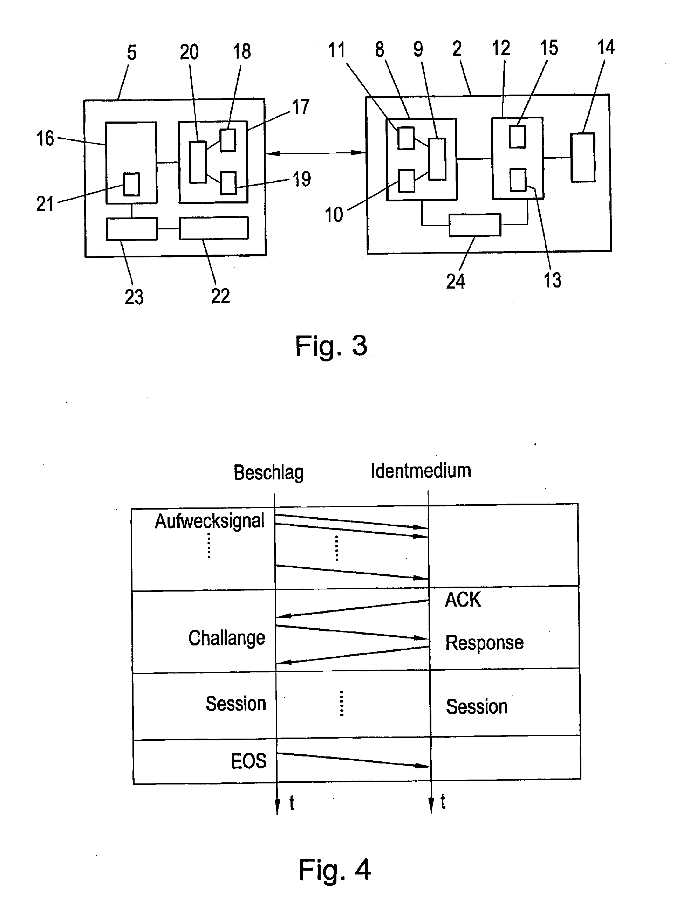

Die Erfindung wird nachfolgend anhand von in der Zeichnung dargestellten Ausführungsbeispielen näher erläutert. In dieser zeigen Fig. 1 eine schematische Darstellung der Funktionsweise einer mit kapazitiver Kopplung arbeitenden Zutrittskontrollvorrichtung, Fig. 2 ein vereinfachtes Ersatzschaltbild der Ausbildung gemäß Fig. 1, Fig. 3 ein Ausführungsbeispiel, bei dem die Datenübermittlung zwischen dem elektronischen Schlüssel und der Zutrittskontrollvorrichtung sowohl kapazitiv als auch über Radiowellen erfolgt, und Fig. 4 ein Ablaufschema der Datenübertragung.

In Fig. 1 ist schematisch eine Tür mit einer die Tür öffnenden Person sowie die einzelnen Streu-, Verlust- und Koppelkapazitäten dargestellt. Die Tür ist mit 1 bezeichnet und weist eine Zutrittskontrollvorrichtung 2 mit einem als Knauf ausgebildeten Betätigungsglied 3 auf. Die Person 4 trägt einen elektronischen Schlüssel 5, welcher beispielsweise in einer Hosentasche eingesteckt sein kann. Der elektronische Schlüssel 5 erzeugt hierbei ein kapazitives Nahfeld mit einer Trägerfrequenz, auf welches Identifikationsdaten aufmoduliert werden. Das kapazitive Nahfeld wird auf die Körperoberfläche der Person 4 eingekoppelt und in der Folge an einen Empfänger der Zutrittskontrollvorrichtung 2 weitergeleitet. Dabei weist der elektronische Schlüssel 5 eine Streukapazität Cst gegen den Boden 6 auf. Am Übergang zwischen dem elektronischen Schlüssel 5 und der Person 4 ist eine Koppelkapazität Ck zu beobachten. Weiters tritt Verlustkapazität Cv zwischen der Person 4 und dem Boden 6 auf. Schließlich weist die Zutrittskontrollvorrichtung 2 bzw. deren Schließzylinder eine Zylinderkapazität Cz gegen den Boden auf.

Das entsprechende vereinfachte Ersatzschaltbild ist in Fig.2 dargestellt, wobei wiederum die beschriebenen Kapazitäten angeführt sind. Dabei bildet Cv alle Kapazitäten nach, welche elektrische Flüsse zur Folge haben, welche sich vom Sender nicht über den Empfangskondensator des Empfängers schließen, sondern an diesem vorbeigehen und somit nichts zur Koppelung zwischen Empfänger und Sender beitragen. Cst bildet die Kapazitäten nach, welche als Summe für die kapazitive Koppelung der Sendeelektrode gegen Boden zur Verfügung steht. Ck bildet die Kapazitäten nach, welche als Summe für die kapazitive Koppelung der Person 4 zur zweiten Elektrode zur Verfügung steht. Cz bildet die Kapazitäten nach, welche als Summe für die kapazitive Koppelung von der Zutrittskontrollvorrichtung bzw. deren Schließzylinder zum Boden zur Verfügung steht. Dabei ist in der Fig.2 die Zutrittskontrollvorrichtung wiederum mit 2 bezeichnet und weist einen Empfangskondensator 7 auf. Die Auslegung des Empfangskondensators 7 ist derart zu treffen, dass sich über den Empfangskondensator einerseits ein ausreichender elektrischer Fluss schließt und dass andererseits die Spannung am Kondensator nicht zu klein wird. Ist die Kapazität des Empfangskondensators zu klein, so schließt sich zu wenig elektrischer Fluss über diesen. Allerdings ist auch eine zu große Kapazität des Empfangskondensators in der Art störend, dass die Spannung am Kondensator U=Q/C ungünstig klein wird.

In Fig. 3 ist die Zutrittskontrollvorrichtung wiederum mit 2 und der elektronische Schlüssel mit 5 bezeichnet. Die Zutrittskontrollvorrichtung 2 umfasst eine Sende-/Empfangseinrichtung 8 mit einer Steuerschaltung 9, die dafür verantwortlich ist, die zu übertragenden Daten entweder dem Funkübertragungsmodul 10 oder dem kapazitiven Datenübertragungsmodul 11 zuzuleiten, welches die Daten über Radiowellen bzw. über eine kapazitive Kopplung überträgt. Das Funkübertragungsmodul 10 und das kapazitive Datenübertragungsmodul 11 umfassen jeweils eine nicht dargestellte Antenne. Die Antenne des Funkübertragungsmodul 10 ist beispielsweise als Richtantenne ausgebildet. Die Antenne des kapazitiven Datenübertragungsmoduls umfasst eine Koppelkapazität z.B. in der Form eines Kondensators mit wenigstens einer Koppelelektrode. Die von der Sende-/Empfangseinrichtung über eine kapazitive Kopplung mit dem Schlüssel 5 oder über eine Funkverbindung mit dem Schlüssel 5 erhaltenen Daten werden Verarbeitungsmitteln in der Form eines Mikrokontrollers 12 zugeführt, in dem die Daten verarbeitet werden. Im Mikrokontroller 12 ist eine Auswerteschaltung 13 realisiert, mit welcher festgestellt wird, ob sich aus Schlüssel 5 empfangenen Identifikationsdaten eine Zutrittsberechtigung ergibt. Bei positiver Überprüfung der Zutrittsberechtigung steuert der Mikrokontroller 12 ein Freigabeelement 14 an, sodass ein Sperrglied einer (nicht dargestellten) Schließeinrichtung freigegeben wird.

Im Zuge eines Zutrittswunsches erfolgt eine bidirektionale Übertragung von Daten zwischen dem Schlüssel 5 und der Zutrittskontrollvorrichtung 2. Eine bidirektionale Verbindung ist beispielsweise für den Austausch von Authentifizierungsdaten beim Aufbau einer sicheren Verbindung zwischen dem Schlüssel 5 und der Zutrittskontrollvorrichtung 2 und für den Austausch von Statusdaten und Prüfdaten od. dgl. erforderlich. Die für die Versendung von der Zutrittskontrollvorrichtung 2 an den Schlüssel 2 vorgesehenen Daten werden in dem Mikrokontroller 12 generiert und aufbereitet und der Sende-/Empfangseinrichtung 8 zugeführt. Eine im Mikrokontroller 12 ausgebildete Anpassungsschaltung 15 ist dabei dafür verantwortlich, die Daten für das Versenden über das Funkübertragungsmodul 10 oder das kapazitive Datenübertragungsmodul 11 anzupassen, was beispielsweise auf Grund der je nach Modul unterschiedlichen Übertragungsprotokolle erforderlich werden kann. Auch die Signalstärke kann angepasst werden, wobei die Anpassungsschaltung grundsätzlich auch in der Sende-/Empfangseinrichtung 8 vorgesehen sein kann.

Der elektronische Schlüssel 5 weist ebenfalls Verarbeitungsmittel in der Form eines Mikrokontrollers 16 und eine mit dem Mikrokontroller 16 verbundene Sende-/Empfangseinrichtung 17 mit einem Funkübertragungsmodul 18 und einem kapazitiven Datenübertragungsmodul 19 auf. Die Steuerschaltung 20 ist dafür verantwortlich die abzusendenden Daten je nach Vorgabe entweder dem Funkübertragungsmodul 18 oder dem kapazitiven Datenübertragungsmodul 19 zuzuführen. Der Mikrokontroller umfasst einen Speicher 21 für Identifikationsdaten.

Im Zuge eines Zutrittswunsches kann die im nachfolgenden Beispiel angegebene Datenkommunikation stattfinden. Sobald die Zutrittskontrollvorrichtung (z.B. im Beschlag integriert) erfolgreich einen elektronischen Schlüssel (z.B. ein Identmedium) im ihrem Umfeld erkannt hat, wird von beiden Seiten aktiv eine Kommunikation aufgebaut. Ist die Übertragung rein kapazitiv, ist es nicht zwingend erforderlich eine Frequenz aus einem ISM Frequenzband zu benutzen, da bei dieser Art der Übertragung keine elektromagnetische Abstrahlung in den Raum stattfindet. Abb. 4 zeigt den Ablauf einer Datenübertragung. Der Beschlag sendet zu Beginn eine Anfragenachricht, um festzustellen, ob das Identmedium sich in der Nähe befindet und betriebsbereit ist. Sobald das Identmedium dieses Signal erfolgreich erkennt, sendet es ein Acknowledge-Signal (ACK) zurück zum Beschlag. Darauf erfolgt eine "Challenge-Response"-Authentifizierung:

| Beschlag | | Identmedium |
|---|---|---|
| Der Beschlag sendet einen Authentifizierungsbefehl an das Identmedium | --> 1 Byte | Das Identmedium generiert eine 8 Byte Zufallszahl (RndNrI), verschlüsselt diese mit seinem Schlüssel SI und sendet sie an den Beschlag. |
| | <-- SI(RndNrI) 8 Byte | |
| Der Beschlag entschlüsselt die empfangenen 8Byte Daten mit seinem Schlüssel (SB) und generiert zudem eine weitere 8 Byte Zufallszahl (RndNrB). Die Daten RndNrI und RndNrB werden verschlüsselt und an das Identmedium gesendet | --> SB(RndNrI +RndNrB) 16 Byte | Das Identmedium entschlüsselt alle empfangenen Bytes und kontrolliert die RndNrI. Haben sich diese Daten geändert, so sind SI und SB unterschiedlich und das Identmedium sendet eine Fehlermeldung zum Beschlag. Ist der Block RndNrI korrekt wird RndNrB verschlüsselt an den Beschlag zurückgesendet. |
| Der Beschlag entschlüsselt die empfangenen Daten und kontrolliert diese. Sind die empfangenen Daten gleich der generierten Zufallszahl RndNrB, ist die Authentifizierung vollständig. | <-- SI(RndNrB) 8Byte o. Fehler | |

Am Ende hat sowohl der Beschlag als auch das Identmedium erfolgreich erkannt, dass der jeweilige Gesprächspartner authentisch bzw. gültig ist. Unvollständige Daten, eine zu lange Wartezeit auf die Response und ungültige Daten führen sofort zu einem Kommunikationsabbruch.

In weiterer Folge kann ein 8 Byte Session-Schlüssel (SK) auf beiden Seiten generiert werden. Diese werden über einen festgelegten Berechnungsalgorithmus aus RndNrI und RndNrB generiert. Durch die Verwendung der generierten Zufallszahlen ist sichergestellt, dass bei jeder Authentifizierung ein anderer Schlüssel verwendet wird, welches Replay-Attacken ausschließt und Hack-Versuche, um die geheimen Schlüssel SI und SB zu errechnen sehr aufwendig gestaltet. Der Session-Schlüssel dient dazu, um in weiterer Folge Daten verschlüsselt auszutauschen (siehe Abb. 4 "Session"). Diese sind nötig, um Informationen wie z.B. Batteriestatus, Schlüssel, usw. zu lesen bzw. zu schreiben und sind beliebig erweiterbar. Eine Session wird durch ein End-Of-Session Signal (EOS) beendet. Ein Verbindungsabbruch, zu lange Berechnungszeiten und eine zu große Anzahl von Versuchswiederholungen führen automatisch zu einer Beendigung der Session. Nach einer Beendigung der Session, sowie durch ein EOS Signal als auch durch einen Fehler, muss der Session-Schlüssel neu erzeugt werden.

Der Kommunikationskanal vom Beschlag zum Schlüssel nützt in diesem Beispiel Funkwellen als Trägermedium, wohingegen der Kommunikationskanal vom Schlüssel zum Beschlag das kapazitive Nahfeld verwendet.

Die Vorteile der Erfindung werden auch bei den folgenden Datenübertragungsbeispielen offenkundig.

### Beispiel 1:

Die Kommunikation vom Beschlag zum Schlüssel erfolgt über Funkwellen, die Kommunikation vom Schlüssel zum Beschlag erfolgt über eine kapazitive Kopplung.

### Fall 1:

Das Identmedium sendet bei Annäherung und/oder Berührung die Identifikationsdaten in einem Paket an den Beschlag. Nach dem Erhalt der Daten überprüft der Beschlag mit der mitgesendeten und errechneten Prüfsumme die Korrektheit des Datenpakets. Stimmen die Daten (keine Übertragungsfehler), sendet der Beschlag seine Antwort-Daten (Batteriestatus, Ereignislisten, ...) per Funk an das Identmedium. Das Identmedium antwortet kapazitiv mit einem OK, wenn die Daten korrekt empfangen wurden. Andernfalls kann das Identmedium die Neusendung der Daten beim Beschlag anfordern.

### Fall 2:

Wie Fall 1, das Identmedium sendet seine Daten jedoch in mehreren aufeinanderfolgenden, durch eine Prüfsumme oder CRC gesicherten kurzen Paketen an den Beschlag. Ist nun eines dieser kurzen Pakete korrumpiert, fordert der Beschlag seine erneute Sendung an. Somit wird die gesamte Übertragungszeit im Falle einzelner Störungen nur um die Wiederholungsdauer des einen gestörten kurzen Paketes, also unwesentlich, verlängert, was gegenüber dem Beispiel-Fall 1 (alle Schlüsseldaten müssen erneut gesendet werden) effizienter ist.

Für die Ortung der Person ergeben sich keine Einschränkungen, da sich die Person in der örtlichen Schnittmenge der Reichweite der kapazitiven Kommunikation und der Funkkommunikation befinden muss.

### Beispiel 2:

Die Kommunikation vom Schlüssel zum Beschlag erfolgt über eine kapazitive Kopplung, die Kommunikation vom Beschlag zum Schlüssel hingegen kann sowohl über Funkwellen als auch über eine kapazitive Kopplung erfolgen.

Dabei werden die Daten ähnlich den oben beschriebenen Fällen 1 und 2 gesendet und empfangen. Allerdings mit der Besonderheit, dass alle Daten über den schnellen Funk ausgetauscht werden. Dabei bekommt das Identmedium vom Beschlag einen kurzen temporär gültigen Identifier, welcher erst ganz kurz vor der Berührung oder erst bei Berührung kapazitiv an den Beschlag rückübermittelt wird. Da die Signalstärke bei der kapazitiven Übertragung bei Fastberührung, wie auch ganz besonders bei Berührung stark ansteigt, kann erkannt werden, welche Person den Beschlag berührt. Alle Daten werden trotz der geringen Reichweite verschlüsselt übertragen. Per Funk können in einer weiteren Ausführungsform zuvor mehrere Identmedien (im Sende-/Empfangsbereich) ausgelesen werden und bei Berührung wird dann festgestellt, wer die Türe betätigt.

## Patentansprüche

1. Verfahren zur Zutrittskontrolle insbesondere in Gebäuden, bei dem eine bidirektionale Datenübermittlung zwischen einem elektronischen Schlüssel und einer Zutrittskontrollvorrichtung stattfindet, wobei die Datenübermittlung die Übermittlung von Identifikationsdaten vom elektronischen Schlüssel an die Zutrittskontrollvorrichtung umfasst, wobei die Identifikationsdaten in der Zutrittskontrollvorrichtung zur Feststellung der Zutrittsberechtigung ausgewertet werden und in Abhängigkeit von der festgestellten Zutrittsberechtigung ein Sperrglied zum wahlweisen Freigeben oder Sperren des Zutritts angesteuert wird, wobei die Datenübermittlung zumindest teilweise über eine kapazitive Kopplung zwischen dem elektronischen Schlüssel und der Zutrittskontrollvorrichtung erfolgt, wobei ein Teil der zwischen dem elektronischen Schlüssel (5) und der Zutrittskontrollvorrichtung (2) übermittelten Daten über eine kapazitive Kopplung und ein Teil der Daten über Radiowellen übertragen wird, **dadurch gekennzeichnet, dass** die bidirektionale Datenübermittlung die Aussendung eines Anwesenheitskontrollsignals durch die Zutrittskontrollvorrichtung (2) umfasst, wobei das Anwesenheitskontrollsignal über Radiowellen ausgesendet wird, deren Reichweite weniger als 2m, vorzugsweise weniger als 1m beträgt.

2. Verfahren nach Anspruch 1, **dadurch gekennzeichnet, dass** die Identifikationsdaten vom elektronischen Schlüssel (5) an die Zutrittskontrollvorrichtung (2) über eine kapazitive Kopplung übermittelt werden.

3. Verfahren nach Anspruch 1 oder 2, **dadurch gekennzeichnet, dass** zumindest ein Teil der von der Zutrittskontrollvorrichtung (2) an den elektronischen Schlüssel (5) übermittelten Daten über Radiowellen übertragen wird.

4. Verfahren nach Anspruch 1, 2 oder 3, **dadurch gekennzeichnet, dass** alle vom elektronischen Schlüssel (5) an die Zutrittskontrollvorrichtung (2) übermittelten Daten über eine kapazitive Kopplung übertragen und alle von der Zutrittskontrollvorrichtung (2) an den elektronischen Schlüssel (5) übermittelten Daten über Radiowellen übertragen werden.

5. Verfahren nach einem der Ansprüche 1 bis 4, **dadurch gekennzeichnet, dass** das Anwesenheitskontrollsignal über wenigstens eine Richtantenne gebündelt ausgesendet wird.

6. Verfahren nach einem der Ansprüche 1 bis 5, **dadurch gekennzeichnet, dass** die Zutrittskontrollvorrichtung (2) das Anwesenheitskontrollsignal aussendet, nachdem sie eine Anfragenachricht über eine kapazitive Kopplung erhalten hat.

7. Verfahren nach einem der Ansprüche 1 bis 6, **dadurch gekennzeichnet, dass** der elektronische Schlüssel (5) beim Empfang des Anwesenheitskontrollsignals eine Empfangsbestätigungsnachricht rückübermittelt und die Zutrittskontrollvorrichtung (2) nur bei Erhalt der Empfangsbestätigungsnachricht die weitere Datenübermittlung zwischen der Zutrittskontrollvorrichtung (2) und dem elektronischen Schlüssel (5) freigibt.

8. Verfahren nach Anspruch 7, **dadurch gekennzeichnet, dass** die Empfangsbestätigungsnachricht über eine kapazitive Kopplung rückübermittelt wird.

9. Verfahren nach einem der Ansprüche 1 bis 8, **dadurch gekennzeichnet, dass** mit der Anfragenachricht oder dem Anwesenheitskontrollsignal eine Kennung übermittelt wird, die mit der rückübermittelten Nachricht retourniert wird.

10. Verfahren nach einem der Ansprüche 1 bis 9, **dadurch gekennzeichnet, dass** die bidirektionale Datenübermittlung zwischen dem elektronischen Schlüssel (5) und der Zutrittskontrollvorrichtung (2) folgende Schritte umfasst:
- Übermitteln der Identifikationsdaten vom elektronischen Schlüssel (5) an die Zutrittskontrollvorrichtung (2) über eine kapazitive Kopplung,
- Überprüfen, ob der elektronische Schlüssel (5) in einem vorgegebenen örtlichen Bereich in der Nähe der Zutrittskontrollvorrichtung (2) anwesend ist, indem ein Anwesenheitskontrollsignal von der Zutrittskontrollvorrichtung (2) über gerichtete Radiowellen ausgesendet wird und im Falle des Empfangs des Anwesenheitskontrollsignals durch den elektronischen Schlüssel (5) eine Empfangsbestätigungsnachricht vom elektronischen Schlüssel (5) an die Zutrittskontrollvorrichtung (2) übermittelt wird.

11. Verfahren nach einem der Ansprüche 1 bis 10, **dadurch gekennzeichnet, dass** die Zutrittskontrollvorrichtung (2) einer Tür (1) zugeordnet ist und dass das Anwesenheitskontrollsignal über im Wesentlichen senkrecht zur Tür (1) gerichtete Radiowellen ausgesendet und/oder empfangen wird.

12. Verfahren nach einem der Ansprüche 1 bis 11, **dadurch gekennzeichnet, dass** die Identifikationsdaten über eine sichere Verbindung über eine kapazitive Kopplung übermittelt werden und dass der für den Aufbau der sicheren Verbindung erforderliche Austausch von Daten zwischen dem elektronischen Schlüssel (5) und der Zutrittskontrollvorrichtung (2) zumindest teilweise über Radiowellen erfolgt.

13. Verfahren nach einem der Ansprüche 1 bis 12, **dadurch gekennzeichnet, dass** vom elektronischen Schlüssel (5) über eine kapazitive Kopplung an die Zutrittskontrollvorrichtung (2) übermittelte Daten vom elektronischen Schlüssel (5) in die den elektronischen Schlüssel (5) tragende Person (4) eingekoppelt werden und von einem sich einer Koppelelektrode der Zutrittskontrollvorrichtung (2) annähernden oder diese berührenden Körperteil der Person (4) in die Zutrittskontrollvorrichtung (2) eingekoppelt werden.

14. Vorrichtung zur Durchführung des Verfahrens nach einem der Ansprüche 1 bis 13, umfassend eine Zutrittskontrollvorrichtung (2) und einen elektronischen Schlüssel (5), die jeweils eine Sende-/Empfangseinrichtung (8) aufweisen, um eine bidirektionale Datenübermittlung zwischen dem elektronischen Schlüssel (5) und der Zutrittskontrollvorrichtung (2) zu ermöglichen, wobei der elektronische Schlüssel (5) einen Speicher (21) für Identifikationsdaten aufweist, der mit der Sende-/Empfangseinrichtung (8) des Schlüssels (5) zur Übermittlung der Identifikationsdaten an die Zutrittskontrollvorrichtung (2) zusammenwirkt, wobei die Zutrittskontrollvorrichtung (2) eine Auswerteschaltung (13) zur Feststellung der Zutrittsberechtigung auf Grund der empfangenen Identifikationsdaten aufweist und die Auswerteschaltung (13) mit einem Sperrglied zum wahlweisen Freigeben oder Sperren des Zutritts zusammenwirkt, wobei die Sende-/Empfangseinrichtung (8) des elektronischen Schlüssels (5) und der Zutrittskontrollvorrichtung (2) jeweils ein wenigstens eine Koppelkapazität aufweisendes kapazitives Datenübertragungsmodul (11) aufweist, sodass die Datenübermittlung zumindest teilweise über eine kapazitive Kopplung zwischen dem elektronischen Schlüssel (5) und der Zutrittskontrollvorrichtung (2) erfolgen kann, wobei die Sende-/Empfangseinrichtung (8) des elektronischen Schlüssels (5) und der Zutrittskontrollvorrichtung (2) jeweils weiters ein Funkübertragungsmodul (10) aufweist, sodass die zwischen dem elektronischen Schlüssel (5) und der Zutrittskontrollvorrichtung (2) übermittelten Daten wahlweise über eine kapazitive Kopplung und/oder über Radiowellen übertragen werden können, **dadurch gekennzeichnet, dass** die Steuerschaltung (20) der Zutrittskontrollvorrichtung (2) so eingerichtet ist, dass ein Anwesenheitskontrollsignal von der Zutrittskontrollvorrichtung (2) über Radiowellen ausgesendet wird, deren Reichweite weniger als 2m, vorzugsweise weniger als lm beträgt.

15. Vorrichtung nach Anspruch 14, **dadurch gekennzeichnet, dass** die Sende-/Empfangseinrichtung (8) des elektronischen Schlüssels (5) und der Zutrittskontrollvorrichtung (2) jeweils eine Steuerschaltung aufweist, die eingerichtet ist, um die Daten in Abhängigkeit von Steuerinformationen entweder über das Funkübertragungsmodul (10) oder über das kapazitive Datenübertragungsmodul (11) oder über beide Module zu empfangen oder zu senden.

16. Vorrichtung nach Anspruch 15, **dadurch gekennzeichnet, dass** die Steuerschaltung (20) so eingerichtet ist, dass die Identifikationsdaten vom elektronischen Schlüssel (5) an die Zutrittskontrollvorrichtung (2) über das kapazitive Datenübertragungsmodul (11) übermittelt werden.

17. Vorrichtung nach Anspruch 15 oder 16, **dadurch gekennzeichnet, dass** die Steuerschaltung (20) so eingerichtet ist, dass zumindest ein Teil der von der Zutrittskontrollvorrichtung (2) an den elektronischen Schlüssel (5) übermittelten Daten über das Funkübertragungsmodul (10) übertragen wird.

18. Vorrichtung nach Anspruch 15, 16 oder 17, **dadurch gekennzeichnet, dass** die Steuerschaltung (20) so eingerichtet ist, dass alle von der Zutrittskontrollvorrichtung (2) an den elektronischen Schlüssel (5) übermittelte Daten über das Funkübertragungsmodul (10) übertragen und alle von dem elektronischen Schlüssel (5) an die Zutrittskontrollvorrichtung (2) übermittelten Daten über das kapazitive Datenübertragungsmodul (11) übertragen werden.

19. Vorrichtung nach einem der Ansprüche 14 bis 18, **dadurch gekennzeichnet, dass** das Funkübertragungsmodul (10) Einstellmittel zur Einstellung der Sendeleistung umfasst.

20. Vorrichtung nach einem der Ansprüche 14 bis 19, **dadurch gekennzeichnet, dass** das Funkübertragungsmodul (10) eine Sendeleistung aufweist, sodass die Reichweite der ausgesendeten Radiowellen weniger als 2m, vorzugsweise weniger als 1m beträgt.

21. Vorrichtung nach einem der Ansprüche 14 bis 20, **dadurch gekennzeichnet, dass** das Funkübertragungsmodul (10) als Richtsender ausgebildet ist.

22. Vorrichtung nach Anspruch 21, **dadurch gekennzeichnet, dass** die Zutrittskontrollvorrichtung (2) einer Tür (1) zugeordnet ist und dass die Richtantenne des Richtsenders angeordnet ist, um die Radiowellen im Wesentlichen senkrecht zur Tür (1) gerichtet auszusenden und/oder zu empfangen.

23. Vorrichtung nach einem der Ansprüche 14 bis 22, **dadurch gekennzeichnet, dass** Mittel zum Aufbauen einer sicheren Verbindung zwischen dem elektronischen Schlüssel (5) und der Zutrittskontrollvorrichtung (2) vorgesehen sind und dass die Steuerschaltungen des elektronischen Schlüssels (5) und der Zutrittskontrollvorrichtung (2) so eingerichtet sind, dass die Identifikationsdaten über die sichere Verbindung über das kapazitive Datenübertragungsmodul (11, 19) übermittelt werden und dass der für den Aufbau der sicheren Verbindung erforderliche Austausch von Daten zwischen dem elektronischen Schlüssel (5) und der Zutrittskontrollvorrichtung (2) über die Funkübertragungsmodule (10, 18) erfolgt.

24. Vorrichtung nach einem der Ansprüche 14 bis 23, **dadurch gekennzeichnet, dass** die Sende-/Empfangseinrichtungen (8) jeweils eine Signalanpassungsschaltung aufweisen, um das zu übertragende Signal nach Bedarf für die Radiowellenübertragung oder die kapazitive Übertragung anzupassen.

## Claims

1. Method for access control, in particular in buildings, in which a bidirectional data transmission takes place between an electronic key and an access control device, said data transmission including the transmission of identification data from the electronic key to the access control device, wherein the identification data are evaluated in the access control device for determining access authorization and a blocking member for selectively authorizing or blocking the access is activated as a function of the determined access authorization, wherein the data transmission is effected at least partially via a capacitive coupling between the electronic key and the access control device, wherein a portion of the data transmitted between the electronic key (5) and the access control device (2) is transferred via a capacitive coupling and a portion of the data is transferred via radio waves, **characterized in that** the bidirectional data transmission comprises the emission of a presence control signal by the access control device (2), said presence control signal being emitted via radio waves with a range of less than 2m, preferably less than 1m.

2. Method according to claim 1, **characterized in that** the identification data are transmitted from the electronic key (5) to the access control device (2) via a capacitive coupling.

3. Method according to claim 1 or 2, **characterized in that** at least a portion of the data transferred from the access control device (2) to the electronic key (5) is transmitted via radio waves.

4. Method according to claim 1, 2 or 3, **characterized in that** all the data transmitted from the electronic key (5) to the access control device (2) are transferred via a capacitive coupling and all the data transmitted from the access control device (2) to the electronic key (5) are transferred via radio waves.

5. Method according to any one of claims 1 to 4, **characterized in that** the presence control signal is directionally emitted via a directional antenna.

6. Method according to any one of claims 1 to 5, **characterized in that** the access control device (2) emits the presence control signal after having received a request message via a capacitive coupling.

7. Method according to any one of claims 1 to 6, **characterized in that** the electronic key (5) retransmits an acknowledgement of receipt message upon receipt of the presence control signal, and the access control device (2) authorizes any further data transmission between the access control device (2) and the electronic key (5) only upon receipt of the acknowledgement of receipt message.

8. Method according to claim 7, **characterized in that** the acknowledgement of receipt message is retransmitted via a capacitive coupling.

9. Method according to any one of claims 1 to 8, **characterized in that** an identifier is transmitted along with the request message or the presence control signal, which identifier is returned together with the retransmitted message.

10. Method according to any one of claims 1 to 9, **characterized in that** the bidirectional data transmission between the electronic key (5) and the access control device (2) comprises the steps of
- transmitting the identification data from the electronic key (5) to the access control device (2) via a capacitive coupling;
- verifying whether the electronic key (5) is present in a predetermined local area in the vicinity of the access control device (2) by a presence control signal being emitted from the access control device (2) via directional radio waves and, if the presence control signal is received by the electronic key (5), an acknowledgement of receipt message is transmitted from the electronic key (5) to the access control device (2).

11. Method according to any one of claims 1 to 10, **characterized in that** the access control device (2) is assigned to a door (1), and that the presence control signal is emitted and/or received via radio waves directed substantially perpendicularly to the door (1).

12. Method according to any one of claims 1 to 11, **characterized in that** the identification data are transmitted via a safe connection via a capacitive coupling, and that the exchange of data between the electronic key (5) and the access control device (2), which is necessary for building up the safe connection, is effected at least partially via radio waves.

13. Method according to any one of claims 1 to 12, **characterized in that** data transmitted from the electronic key (5) to the access control device (2) via a capacitive coupling are coupled into the person (4) carrying the electronic key (5) by the electronic key (5) and are coupled into the access control device (2) by a part of the body of said person (4) approaching or touching a coupling electrode of the access control device (2).

14. Device for carrying out the method according to any one of claims 1 to 13, including an access control device (2) and an electronic key (5) each having a transceiver (8) in order to enable a bidirectional data transmission between the electronic key (5) and the access control device (2), wherein the electronic key (5) comprises a memory (21) for identification data, which cooperates with the transceiver (8) of the key (5) for transmitting the identification data to the access control device (2), wherein the access control device (2) comprises an evaluation circuit (13) for determining the access authorization based on the received identification data and the evaluation circuit (13) cooperates with a blocking member for selectively authorizing or blocking the access, wherein the transceivers (8) of the electronic key (5) and the access control device (2) each comprise a capacitive data transmitting module (11) having at least one coupling capacitance so as to allow the data transmission to be at least partially effected via a capacitive coupling between the electronic key (5) and the access control device (2), wherein the transceivers (8) of the electronic key (5) and the access control device (2) each further comprise a radio transmission module (10) so as to enable the data transmitted between the electronic key (5) and the access control device (2) to be selectively transferred via a capacitive coupling and/or via radio waves, **characterized in that** the control circuit (20) of the access control device (2) is arranged such that the presence control signal is emitted by the access control device (2) via radio waves with a range of less than 2m, preferably less than 1m.

15. Device according to claim 14, **characterized in that** the transceivers (8) of the electronic key (5) and the access control device (2) each comprise a control circuit arranged to receive or send the data as a function of the control information, either via the radio transmission module (10) or via the capacitive data transmission module (11), or via both modules.

16. Device according to claim 15, **characterized in that** the control device (20) is arranged such that the identification data are transmitted from the electronic key (5) to the access control device (2) via the capacitive data transmission module (11).

17. Device according to claim 15 or 16, **characterized in that** the control circuit (20) is arranged such that at least a portion of the data transmitted from the access control device (2) to the electronic key (5) is transferred via the radio transmission module (10).

18. Device according to claim 15, 16 or 17, **characterized in that** the control circuit (20) is arranged such that all the data transmitted from the access control device (2) to the electronic key (5) are transferred via the radio transmission module (10) and all the data transmitted from the electronic key (5) to the access control device (2) are transferred via the capacitive data transmission module (11).

19. Device according to any one of claims 14 to 18, **characterized in that** the radio transmission module (10) comprises adjustment means for adjusting the transmitting power.

20. Device according to any one of claims 14 to 19, **characterized in that** the radio transmission module (10) comprises a transmitting power such that the range of the emitted radio waves is less than 2m, preferably less than 1m.

21. Device according to any one of claims 14 to 20, **characterized in that** the radio transmission module (10) is configured as a directional transmitter.

22. Device according to claim 21, **characterized in that** the access control device (2) is assigned to a door (1), and that the directional antenna of the directional transmitter is arranged to emit and/or receive the radio waves substantially perpendicularly to the door (1).

23. Device according to any one of claims 14 to 22, **characterized in that** means for building up a safe connection between the electronic key (5) and the access control device (2) are provided, and that the control circuits of the electronic key (5) and the access control device (2) are arranged such that the identification data are transmitted via the safe connection via the capacitive data transmission module (11, 19), and that the exchange of data between the electronic key (5) and the access control device (2), which is necessary for building up the safe connection, is effected via the radio transmission modules (10, 18).

24. Device according to any one of claims 14 to 23, **characterized in that** the transceivers (8) each comprise a signal adaptation circuit to adapt the transmitted signal as needed, either for the radio wave transmission or for the capacitive transmission.

## Revendications

1. Procédé de contrôle d'accès, en particulier dans des immeubles, dans lequel il se produit une transmission de données bidirectionnelle entre une clé électronique et un dispositif de contrôle d'accès, la transmission de données comprenant la transmission de données d'identification de la clé électronique au dispositif de contrôle d'accès, les données d'identification étant analysées dans le dispositif de contrôle d'accès pour vérifier l'autorisation d'accès et, d'après la vérification de l'autorisation d'accès, un organe de blocage est commandé pour débloquer ou bloquer l'accès, au choix, la transmission de données s'effectuant au moins en partie par l'intermédiaire d'un couplage capacitif entre la clé électronique et le dispositif de contrôle d'accès, une partie des données transmises entre la clé électronique (5) et le dispositif de contrôle d'accès (2) étant transmise par l'intermédiaire d'un couplage capacitif et une partie des données étant transmise par l'intermédiaire d'ondes radio, **caractérisé en ce que** la transmission de données bidirectionnelle comprend l'émission d'un signal de contrôle de présence par le dispositif de contrôle d'accès (2), le signal de contrôle de présence étant émis par l'intermédiaire d'ondes radio dont la portée est inférieure à 2 m, de préférence inférieure à 1 m.

2. Procédé selon la revendication 1, **caractérisé en ce que** les données d'identification sont transmises de la clé électronique (5) au dispositif de contrôle d'accès (2) par l'intermédiaire d'un couplage capacitif.

3. Procédé selon la revendication 1 ou 2, **caractérisé en ce qu'**au moins une partie des données transmises du dispositif de contrôle d'accès (2) à la clé électronique (5) est transmise par l'intermédiaire d'ondes radio.

4. Procédé selon la revendication 1, 2 ou 3, **caractérisé en ce que** toutes les données transmises de la clé électronique (5) au dispositif de contrôle d'accès (2) sont transmises par l'intermédiaire d'un couplage capacitif et toutes les données transmises du dispositif de contrôle d'accès (2) à la clé électronique (5) sont transmises par l'intermédiaire d'ondes radio.

5. Procédé selon l'une des revendications 1 à 4, **caractérisé en ce que** le signal de contrôle de présence est émis par l'intermédiaire d'au moins une antenne directionnelle, sous forme de faisceau.

6. Procédé selon l'une des revendications 1 à 5, **caractérisé en ce que** le dispositif de contrôle d'accès (2) émet le signal de contrôle de présence après avoir reçu un message d'interrogation par l'intermédiaire d'un couplage capacitif.

7. Procédé selon l'une des revendications 1 à 6, **caractérisé en ce que**, lors de la réception du signal de contrôle de présence, la clé électronique (5) transmet en retour un message d'accusé de réception et le dispositif de contrôle d'accès (2) ne débloque la poursuite de la transmission de données entre le dispositif de contrôle d'accès (2) et la clé électronique (5) qu'à réception du message d'accusé de réception.

8. Procédé selon la revendication 7, **caractérisé en ce que** le message d'accusé de réception est transmis en retour par l'intermédiaire d'un couplage capacitif.

9. Procédé selon l'une des revendications 1 à 8, **caractérisé en ce qu'**avec le message d'interrogation ou avec le signal de contrôle de présence, est transmis un indicatif qui est retourné avec le message transmis en retour.

10. Procédé selon l'une des revendications 1 à 9, **caractérisé en ce que** la transmission de données bidirectionnelle entre la clé électronique (5) et le dispositif de contrôle d'accès (2) comprend les étapes suivantes :
- transmission des données d'identification de la clé électronique (5) au dispositif de contrôle d'accès (2) par l'intermédiaire d'un couplage capacitif,
- vérification du fait que la clé électronique (5) est présente dans une zone locale prédéterminée située à proximité du dispositif de contrôle d'accès (2), par le fait qu'un signal de contrôle de présence est émis par le dispositif de contrôle d'accès (2) par l'intermédiaire d'ondes radio dirigées et qu'en cas de réception du signal de contrôle de présence par la clé électronique (5), un accusé de réception est transmis de la clé électronique (5) au dispositif de contrôle d'accès (2).

11. Procédé selon l'une des revendications 1 à 10, **caractérisé en ce que** le dispositif de contrôle d'accès (2) est affecté à une porte (1) et **en ce que** le signal de contrôle de présence est émis et/ou reçu par l'intermédiaire d'ondes radio dirigées sensiblement perpendiculairement à la porte (1).

12. Procédé selon l'une des revendications 1 à 11, **caractérisé en ce que** les données d'identification sont transmises par une liaison sécurisée par l'intermédiaire d'un couplage capacitif et **en ce que** l'échange de données entre la clé électronique (5) et le dispositif de contrôle d'accès (2) qui est nécessaire pour l'établissement de la liaison sécurisée, s'effectue au moins en partie par l'intermédiaire d'ondes radio.

13. Procédé selon l'une des revendications 1 à 12, **caractérisé en ce que** des données transmises de la clé électronique (5) au dispositif de contrôle d'accès (2) par l'intermédiaire d'un couplage capacitif sont injectées dans la personne (4) qui porte la clé électronique (5) et sont injectées dans le dispositif de contrôle d'accès (2) par une partie du corps de la personne (4) qui s'approche d'une électrode de couplage du dispositif de contrôle d'accès (2) ou la touche.

14. Dispositif pour la mise en oeuvre du procédé selon l'une des revendications 1 à 13, comprenant un dispositif de contrôle d'accès (2) et une clé électronique (5) qui présentent chacun un dispositif d'émission/réception (8), pour permettre une transmission de données bidirectionnelle entre la clé électronique (5) et le dispositif de contrôle d'accès (2), la clé électronique (5) présentant une mémoire (21) pour des données d'identification, qui coopère avec le dispositif d'émission/réception (8) de la clé (5) pour assurer la transmission des données d'identification au dispositif de contrôle d'accès (2), le dispositif de contrôle d'accès (2) présentant un circuit d'évaluation (13) destiné à constater l'autorisation d'accès sur la base des données d'identification reçues et le circuit d'évaluation (13) coopérant avec un organe de blocage pour l'exécution sélective du déblocage ou du blocage de l'accès, le dispositif d'émission/réception (8) de la clé électronique (5) et celui du dispositif de contrôle d'accès (2) présentant chacun un module de transmission de données (11) de type capacitif qui présente au moins une capacité de couplage, de sorte que la transmission de données entre la clé électronique (5) et le dispositif de contrôle d'accès (2) peut s'effectuer au moins en partie par l'intermédiaire d'un couplage capacitif, le dispositif d'émission/réception (8) de la clé électronique (5) et celui du dispositif de contrôle d'accès (2) présentant en outre chacun un module de transmission radio (10), de sorte que les données transmises entre la clé électronique (5) et le dispositif de contrôle d'accès (2) peuvent être transmises au choix par l'intermédiaire d'un couplage capacitif et/ou par l'intermédiaire d'ondes radio, **caractérisé en ce que** le circuit de commande (20) du dispositif de contrôle d'accès (2) est agencé de telle sorte qu'un signal de contrôle de présence est émis par le dispositif de contrôle d'accès (2) par l'intermédiaire d'ondes radio dont la portée est inférieure à 2 m, de préférence inférieure à 1 m.

15. Dispositif selon la revendication 14, **caractérisé en ce que** le dispositif d'émission/réception (8) de la clé électronique (5) et celui du dispositif de contrôle d'accès (2) présentent chacun un circuit de commande qui est agencé pour recevoir ou émettre les données en fonction des informations de commande, soit par l'intermédiaire du module de transmission radio (10), soit par l'intermédiaire du module de transmission de données capacitif (11), soit encore par l'intermédiaire des deux modules.

16. Dispositif selon la revendication 15, **caractérisé en ce que** le circuit de commande (20) est agencé de telle sorte que les données d'identification sont transmises par la clé électronique (5) au dispositif de contrôle d'accès (2) par l'intermédiaire du module de transmission de données capacitif (11).

17. Dispositif selon la revendication 15 ou 16, **caractérisé en ce que** le circuit de commande (20) est agencé de telle sorte qu'au moins une partie des données transmises du dispositif de contrôle d'accès (2) à la clé électronique (5) sont transmises par l'intermédiaire du module de transmission radio (10).

18. Dispositif selon la revendication 15, 16 ou 17, **caractérisé en ce que** le circuit de commande (20) est conçu de telle sorte que toutes les données transmises du dispositif de contrôle d'accès (2) à la clé électronique (5) sont transmises par l'intermédiaire du module de transmission radio (10) et que toutes les données transmises de la clé électronique (5) au dispositif de contrôle d'accès (2) sont transmises par l'intermédiaire du module de transmission de données capacitif (11).

19. Dispositif selon l'une des revendications 14 à 18, **caractérisé en ce que** le module de transmission radio (10) comprend des moyens de réglage servant à régler la puissance d'émission.

20. Dispositif selon l'une des revendications 14 à 19, **caractérisé en ce que** le module de transmission radio (10) présente une puissance d'émission telle que la portée des ondes radio émises soit inférieure à 2 m, de préférence inférieure à 1 m.

21. Dispositif selon l'une des revendications 14 à 20, **caractérisé en ce que** le module de transmission radio (10) est constitué par un émetteur directif.

22. Dispositif selon la revendication 21, **caractérisé en ce que** le dispositif de contrôle d'accès (2) est affecté à une porte (1) et que l'antenne directive de l'émetteur directif est conçue pour émettre/recevoir les ondes radio dans une direction sensiblement perpendiculaire à la porte (1).

23. Dispositif selon l'une des revendications 14 à 22, **caractérisé en ce qu'**il est prévu des moyens pour établir une liaison sécurisée entre la clé électronique (5) et le dispositif de contrôle d'accès (2) et **en ce que** les circuits de commande de la clé électronique (5) et du dispositif de contrôle d'accès (2) sont conçus de telle sorte que les données d'identification sont transmises par l'intermédiaire de la liaison sécurisée et par l'intermédiaire du module de transmission de données capacitif (11, 19) et que l'échange de données entre la clé électronique (5) et le dispositif de contrôle d'accès (2) qui est nécessaire pour l'établissement de la liaison sécurisée s'effectue par l'intermédiaire du module de transmission radio (10, 18).

24. Dispositif selon l'une des revendications 14 23, **caractérisé en ce que** les dispositifs d'émission/réception (8) présentent chacun un circuit d'adaptation du signal servant à adapter le signal à transmettre en fonction du besoin pour la transmission par ondes radio ou pour la transmission capacitive.
